# EUROPÄISCHE PATENTSCHRIFT

(11) **EP 3 380 371 B1**
(45) Veröffentlichungstag und Bekanntmachung des Hinweises auf die Patenterteilung: **17.07.2019**
(21) Anmeldenummer: 16793752.3
(22) Anmeldetag: 07.11.2016
(51) Int. Cl.: B60T 8/171

(54) **DRUCKLUFT-BREMSSYSTEM FÜR EIN FAHRZEUG UND EIN VERFAHREN ZUR STEUERUNG EINES DERARTIGEN DRUCKLUFT-BREMSSYSTEMS**
COMPRESSED AIR BRAKE SYSTEM FOR A VEHICLE AND A METHOD FOR CONTROLLING A COMPRESSED AIR BRAKE SYSTEM OF THIS TYPE
SYSTÈME DE FREINAGE PNEUMATIQUE POUR VÉHICULE ET PROCÉDÉ DE COMMANDE DUDIT SYSTÈME DE FREINAGE PNEUMATIQUE

(30) Priorität: 28.11.2015 DE 102015015471
(43) Veröffentlichungstag der Anmeldung: 03.10.2018
(73) Patentinhaber: WABCO GmbH, 30453 Hannover (DE)
(72) Erfinder: HANSLIK, Daniel, 30916 Isernhagen (DE); KALLENBACH, Stephan, 30161 Hannover (DE); WENDLANDT, Alexander, 30457 Hannover (DE)
(74) Vertreter: Rabe, Dirk-Heinrich
(86) Internationale Anmeldenummer: PCT/EP2016/001839
(87) Internationale Veröffentlichungsnummer: WO 2017/088952

(56) Entgegenhaltungen:
- DE-A1-102013 226 004
- KR-A- 20140 005 562

## Beschreibung

Die Erfindung betrifft ein Druckluft-Bremssystem für ein Fahrzeug und ein Verfahren zur Steuerung eines derartigen Druckluft-Bremssystems.

Druckluft-Bremssysteme für Fahrzeuge können entsprechend der Aussteuerung des Bremsdrucks, der in einem Fahrer-Bremsbetrieb bei Betätigung des Bremspedals durch den Fahrer erfolgt, unterteilt werden in Druckluft-Bremssysteme mit analoger Bremsdruckleitung, auch ABS-Systeme genannt, und elektronische Bremssysteme, auch EBS-Systeme genannt.

Bei analogen Bremssystemen bzw. ABS-Bremssystemen wird bei Betätigung des Bremspedals von einem angeschlossenen Bremsventil ein analoger Druckluftwert auf eine Bremsdruck-Steuerleitung gegeben, die nachfolgend - gegebenenfalls über weitere Ventileinrichtungen wie eine AchslastVerteilung und Ventileinrichtungen zum Zuschalten weiterer Funktionen - an einen oder mehrere Bremskreise durchgeleitet wird. Weiterhin ist eine ABS-Steuereinrichtung zur Aussteuerung von ABS-Sperrventilen vorgesehen ist. Hierbei wird der analoge Fahrerbremsdruck im Allgemeinen durch Relaisventile volumenmäßig verstärkt. Der vom Fahrer eingegebene Fahrerbremsdruck oder ein in dem Bremskreis vorliegender Bremsdruck kann gegebenenfalls sensiert werden.

Bei elektronischen Bremssystemen bzw. EBS-Systemen wird die Betätigung des Bremspedals durch den Fahrer sensiert, zum Beispiel über einen Wegsensor, und hieraus ein Bremsdruck-Sollwert ermittelt wird, der nachfolgend aus einem Systemdruck, im Allgemeinen einem Vorratsdruck eines Vorratsbehälters, durch zum Beispiel ein getaktetes Proportionalventil als analoger Bremsdruckwert ausgesteuert wird, der einem Bremskreis mit mindestens einer Radbremse zugeführt wird.

Bei EBS-Systemen können bei der Aussteuerung des analogen Bremsdruckwertes Änderungen gegenüber dem vom Fahrer vorgegebenen Bremsdruck-Sollwert vorgenommen werden, zum Beispiel auch externe Bremswertvorgaben von Fahrerassistenz-Funktionen.

Fahrerassistenz-Funktionen, die einen Fahrerassistenz-Bremsbetrieb anfordern, sind im Allgemeinen nicht für die direkte Fahrstabilität des Fahrzeugs vorgesehen, sondern ermöglichen z. B. Anpassungen des Fahrverhaltens des Fahrzeugs an den Straßenverkehr. Derartige Fahrerassistenz- Funktionen beziehungsweise ADAS (additional driver assistant systems) umfassen insbesondere ein ACC (automotive cruise control, Abstands- Regelverfahren) zur Einhaltung eines Abstandes zu einem vorausfahrenden Fahrzeuges, weiterhin auch Notbremssysteme, die insbesondere bei Erkennen einer kritischen Verkehrssituation zur Vermeidung eines voraussichtlich erfolgenden Auffahrunfalls (Frontalcrashs) und /oder zur. Verringerung der Schwere eines voraussichtlichen Unfalls vorgesehen sind und auch als AEBS (advanced emergency braking system) bezeichnet werden. Weitere Fahrerassistenz-Funktionen sind Bremsassistenz-Funktionen zur Verstärkung einer Bremsanforderung des Fahrers bei Erkennen einer kritischen Verkehrssituation, sogenannte EBA (electronic brake assistant), um bei Erkennen zum Beispiel eines möglichen Auffahrunfalls den Fahrerbremswunsch geeignet zu verstärken.

Die Fahrerassistenzfunktionen sind in separaten Fahrerassistenz-Steuergeräten beziehungsweise -Steuereinrichtungen vorgesehen und können je nach gewünschter Ausstattung des jeweiligen Fahrzeugs ergänzt werden. Die Fahrerassistenz- Steuereinrichtungen ermitteln einen Bremswunsch und übermitteln diesen als externes Bremsanforderungssignal, auch XBR-Signal genannt (External Brake Request) an die Steuereinrichtung des Bremssystems, um diesen Bremswunsch zu berücksichtigen.

Bei einem EBS-System kann die EBS-Steuereinrichtung den externen Bremsanforderungswunsch alternativ oder ergänzend zu einem durch Bremspedal-Betätigung ermittelten Fahrerbremswunsch bearbeiten.

Bei analogen Bremssystemen beziehungsweise ABS-Bremssystemen ist im allgemeinen ein Ventil oder eine Ventileinrichtung als Zuschalt-Einrichtung vorgesehen, die z. B. in einer Grundstellung, d.h. einem Fahrer-Bremsbetrieb, den analogen Fahrer-Bremsdruck zu einem Bremskreis durchleitet oder bei Aktivierung einen Fahrerassistenz-Bremsbetrieb einleitet und einen Systemdruck durchleitet; der Systemdruck beziehungsweise Vorratsdruck kann dann nachfolgend durch Taktung der ABS-SperrventilEinrichtung zu dem analogen Bremsdruckwert in den Bremskreis ausgesteuert werden. Die Zuschalteinrichtung kann insbesondere als Solenoid-3/2-Wegeventil ausgeführt sein, die von der ABS-Steuereinrichtung mit einem Zuschaltsignal umgeschaltet wird.

Bei derartigen ABS-Bremssystemen, die eine zusätzliche Fahrerassistenz-Funktion berücksichtigen sollen, ist somit im Allgemeinen lediglich eine alternative Aussteuerung entweder des analogen Fahrerbremsdrucks oder des externen Bremsanforderungssignals möglich. Hierbei sind Maximal-Verfahren bekannt, bei denen der analoge Fahrerbremsdruck und der extern angeforderte Bremsdruck verglichen werden und entsprechend der größere Wert ausgesteuert wird, indem somit die Zuschalteinrichtung in ihrer Grundstellung bzw. Fahrerbrems-Stellung bleibt, um den größeren Fahrer-Bremsdruck auszusteuern, oder ein die Funktionsstellung verstellt wird, um den größeren extern angeforderten Bremsdruck auszusteuern.

### Austauschseite 3a

Die DE 10 2013 226 004 A1 offenbart ein Verfahren zur Steuerung eines Fahrzeugs mit einem eine Bremsassistenzfunktion aufweisenden Fahrerassistenzsystem sowie einer Umfelddaten erzeugenden Umfeldsensorikeinheit, bei dem mittels eines Bremspedalpositionssensor oder einem Bremspedalbetätigungskraftsensor die Bremspedalposition oder die Bremspedalbetätigungskraft eines von einem Fahrer betätigten Bremspedals erfasst und von dem Fahrerassistenzsystem ausgewertet wird, wobei
- bei einer Bremspedalbetätigung durch den Fahrer eine Bremspedalstellung oder eine Bremspedalbetätigungskraft detektiert wird, die kleiner als ein vorgegebener Schwellwert ist, von dem Fahrerassistenzsystem eine Bremsmomentanforderung in Abhängigkeit des fahrdynamischen Zustandes des Fahrzeugs und der Umfelddaten erzeugt wird, und
- bei Überschreiten des vorgegebenen Schwellwertes durch die Bremspedalbetätigung des Fahrers hinsichtlich der Bremspedalposition oder der Bremspedalbetätigungskraft die Bremsassistenzfunktion deaktiviert wird.

Die KR 2014 0005562 A offenbart ein Verfahren mit einem Schritt zum Berechnen eines erforderlichen Bremsdruckwerts durch eine ECU, wenn ein Bremsbefehl eingegeben wird, und einen Schritt zum Bestimmen, ob ein ABS-Modus (Antiblockiersystem) aktiviert ist oder nicht, und einen Schritt zum Verteilen des Hydraulikdrucks durch Liefern eines Hydraulikdrucks, der an einen Pedalsimulator geliefert wird, an einen Hauptzylinder, wenn bestimmt wird, dass der ABS-Modus durch das Ergebnis der Bestimmung aktiviert wird.

Es zeigt sich jedoch, dass derartige Verfahren zu einem unzweckmäßigen Hin- und Herschalten der Zuschalteinrichtung führen können, wobei bei einem derartigen Umschaltvorgang eine schlagartige Veränderung des Bremsverhaltens auftreten kann, da zum Beispiel bei Umschaltung von dem Fahrer-Bremsbetrieb, bei dem der analoge Fahrerbremsdruck an der Zuschalteinrichtung anliegt, auf den Fahrerassistenz-Bremsbetrieb zunächst sehr plötzlich der höhere Systemdruck an der Zuschalteinrichtung anliegt und erst nachfolgend durch die ABS-Sperrventile getaktet verringert werden kann.

Aufgabe der Erfindung ist es, ein Druckluft-Bremssystem und ein Verfahren zur Steuerung eines derartigen Druckluft-Bremssystems zu schaffen, die mit relativ geringem Aufwand einen hohen Bremskomfort unter Berücksichtigung eines externen Bremsanforderungssignals einer Fahrerassistenzfunktion ermöglichen.

Diese Aufgabe wird durch ein Druckluft-Bremssystem nach Anspruch 1 und ein Verfahren zur Steuerung eines derartigen Druckluft-Bremssystems gelöst. Die Unteransprüche beschreiben bevorzugte Weiterbildungen.

Somit wird der vom Fahrer über das Bremspedal und das Bremsventil eingesteuerte analoge Fahrer-Bremsdruck sensiert und nachfolgend als Fahrer-Bremsdruckwert berücksichtigt, sodass aus dem Fahrer-Bremsdruckwert und dem externen Bremsdruckwert des externen Bremsanforderungssignals ein kombinierter Bremsdruckwert ermittelt werden kann, der nachfolgend von der ABS-Steuereinrichtung durch Aussteuerung der ABS-Sperrventileinrichtung aus dem Systemdruck eingestellt werden kann.

Somit kann in dem kombinierten Bremsbetrieb insbesondere die Zuschalteinrichtung jeweils in die Funktionsstellung, d.h. die Schaltstellung des Fahrerassistenz- Bremsbetriebes, umgeschaltet werden.

Der Erfindung liegt der Gedanke zugrunde, dass der Fahrer-Bremswunsch und die externe Bremsanforderung durchaus additiv beziehungsweise kumulativ oder überlagernd berücksichtigt werden können, indem hierzu vorzugsweise eine Aussteuerung entsprechend dem Fahrerassistenz-Bremsbetrieb erfolgt, das heißt aus einem Systemdruck, insbesondere durch Taktung der ABS-Sperrventileinrichtung. Für einen kombinierten Bremsbetrieb wird somit vorteilhafterweise die Zuschalteinrichtung in ihre (betätigte) Funktionsstellung des Fahrerassistenz-Bremsbetriebes geschaltet.

Die Sensierung des Fahrer-Bremsdrucks kann über einen an die Bremsdruck-Steuerleitung angeschlossenen Drucksensor erfolgen. Hierzu können die beiden Bremsdruckwerte zum Beispiel einfach addiert werden. Weiterhin sind jedoch auch komplexere Ermittlungen möglich.

Gemäß einer bevorzugten Ausbildung kann eine Addition des Fahrer-Bremsdruckwertes und des externen erfolgen, solange der Fahrer-Bremsdruckwert einen Anteils-Schwellwert nicht überschreitet. Bei Überschreitung oder Erreichen des Anteils-Schwellwertes kann hingegen auf einen Fahrer-Bremsbetriebs umgeschaltet werden, das heißt insbesondere die Zuschalteinrichtung in ihre (Grund-) Stellung für den Fahrer- Bremsbetrieb umgeschaltet werden. Dem liegt der Gedanke zugrunde, dass bei einem höheren Anteil des Fahrer-Bremswunsches, das heißt einer relevanten Fahrer-Bremsbetätigung, dem Fahrer eine direkte Rückwirkung seiner Bremspedal-Betätigung vermittelt werden sollte, wozu der Fahrer- Bremsbetrieb besser geeignet ist.

Weiterhin können auch ein unterer Anteils-Schwellwert und ein oberer Anteils-Schwelwert vorgesehen sein, die einen Übergangsbereich definieren, in dem zum Beispiel eine Rampe eingesetzt wird, mit der der Anteil des Fahrer-Bremsdruckwertes zum Beispiel erhöht wird, z. B. linear; bei Erreichen des oberen Anteils-Schwellwertes kann somit vollständig auf den Fahrer-Bremsbetrieb umgeschaltet werden, das heißt die Zuschalteinrichtungen in ihre (Grund-)Stellung umgeschaltet werden. Durch den Übergangsbereich mit den beiden Anteils-Schwellwerten kann insbesondere auch ein zu schnelles Hin-und Herschalten vermieden werden. Hierbei kann der Fahrerassistenz-Bremsdruck in dem Übergangsbereich noch in geringem Umfang berücksichtigt werden.

Die Ermittlung des kombinierten Bremsdruckwertes kann zum einen in der ABS-Steuereinrichtung erfolgen, in dem diese aus dem sensierten Fahrerbremsdruckwert und dem übermittelten externen Bremsdruckwert den kombinierten Bremsdruckwert ermittelt, und nachfolgend durch Ansteuerung der Zuschalteinrichtung und der ABS-Steuerventileinrichtung aussteuert.

Eine derartige Aussteuerung durch die ABS-Steuereinrichtung hat hierbei den Vorteil, dass höhere Bremsdruckwerte eingestellt werden können, als zum Beispiel durch das externe Bremsanforderungssignal vorgegeben werden. Da die Fahrerassistenzfunktionen durch separate Steuergeräte - je nach Aufbau des Fahrzeugs mit unterschiedlichen Fahrerassistenz-Funktionen - ergänzend eingesetzt werden, werden sie im Allgemeinen auch für unterschiedliche Fahrzeug-Typen und unterschiedliche Bremssysteme standardisiert angeboten. Somit wird ein von einer Fahrerassistenz-Steuereinrichtung ausgegebenes externes Bremsanforderungssignal im Allgemeinen externe Bremsdruckwerte anfordern, die auch schwächer ausgelegte Bremssysteme berücksichtigen und daher nicht zu hoch sind. So kann zum Beispiel ein ABS-Druckluft-Bremssystem Bremsdrücke bis 10 bar aussteuern; einige externe Fahrerassistenz-Steuereinrichtungen fordern in ihrem XBR-Signal jedoch zum Beispiel lediglich Bremsdrücke bis 8 bar an, damit diese auch von schwächeren oder älteren Bremssystemen umgesetzt werden können. Bei der Ermittlung des kombinierten Bremsdruckwertes in der ABS-Steuereinrichtung kann diese die tatsächlich aussteuerbaren Bremsdruckwerte heranziehen und somit dem externen Bremsanforderungssignal einen zusätzlichen Bremsdruckwert überlagern beziehungsweise addieren.

Alternativ hierzu kann der kombinierte Bremsdruckwert auch in der externen Fahrerasssistenz-Steuereinrichtung ermittelt und nachfolgend über das externe Bremsanforderungssignal übertragen werden. In einem derartigen Fall ermittelt die ABS-Steuereinrichtung somit zunächst durch Sensierung des analogen Fahrerbremsdrucks den Fahrerbremsdruckwert und teilt diesen über ein Datensignal, zum Beispiel wiederum über den internen Fahrzeug-Datenbus, der externen Fahrerassistenz-Steuereinrichtung mit, so dass diese das XBR-Signal mit dem kombinierten Bremsdruckwert ermittelt und der ABS-Steuereinrichtung mitteilt. Somit kann die ABS-Steuereinrichtung den kombinierten Bremsbetrieb als üblichen Fahrerassistenz-Bremsbetrieb entsprechend dem übermittelten XBR-Signal aussteuern. Die zusätzliche Funktionalität kann in einem derartigen Fall in der ABS-Steuereinrichtung ausgebildet werden, indem die ABS-Steuereinrichtung derartig ausgestaltet beziehungsweise programmiert wird, dass sie ein durch Sensierung ermittelten Fahrer-Bremsdruckwert einer externen Fahrerassistenz-Steuereinrichtung mitteilt, ohne dass die ABS-Steuereinrichtung zur Ausbildung von drei verschiedenen Bremsbetrieben auszubilden ist.

Die Erfindung wird im Folgenden anhand der beiliegenden Zeichnungen an einigen Ausführungsformen näher erläutert. Es zeigen:
- Fig. 1: ein elektropneumatisches Schaltbild eines Bremssystems gemäß verschiedener Ausführungsformen;
- Fig. 2: ein Flussdiagramm eines erfindungsgemäßen Verfahrens.

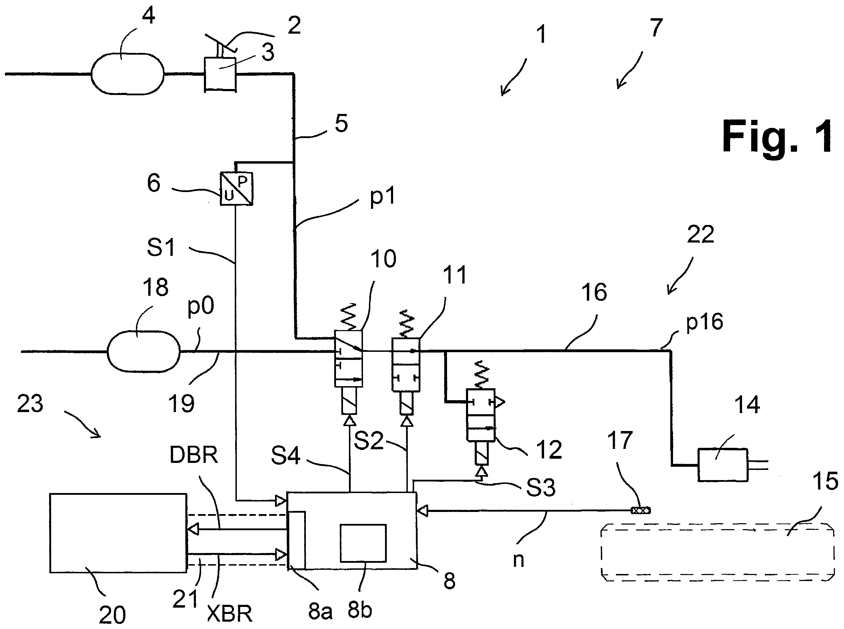

Ein Druckluft-Bremssystem 1 eines Nutzfahrzeugs ist in Figur 1 für einen Bremskreis gezeigt. Der Fahrer betätigt über ein Bremspedal 2 ein Bremsventil 3, das Druckluft von einem ersten Druckluft-Vorratsspeicher 4 auf eine Bremsdruck-Steuerleitung 5 legt. Somit wird in Abhängigkeit der Betätigung des Bremspedals 2 durch das Bremsventil 3 ein analoger Fahrer- Bremsdruck p1 auf die Bremsdruck-Steuerleitung 5 gelegt. Ein Drucksensor 6 misst den analogen Fahrer- Bremsdruck p1 und gibt ein Bremsdruck- Messsignal S1 an eine ABS-Steuereinrichtung 8 aus. Der analoge Fahrer- Bremsdruck p1 wird nachfolgend zu einer Zuschalt-Ventileinrichtung 10, die hier als 3/2-Wege-Solenoidventil beziehungsweise Zuschaltventil 10 ausgebildet ist, zugeführt. In ihrer Grundstellung ist das Zuschaltventil 10 in seiner Fahrerbrems-Stellung, in der es die Bremsdruck-Steuerleitung 5 mindestens einem Bremskreis zuführt, d.h. über ABS-Sperrventile 11, 12, d.h. ein ABS-Einlassventil 11 und ein ABS-Auslassventil 12, und eine Bremsleitung 16 einer Radbremse 14 zuführt, die an einem Fahrzeugrad 15 vorgesehen ist.

In dieser schematischen Zeichnung sind somit weitere, an sich bekannte Ventile, zum Beispiel für eine Achslastverteilung, sowie ein vor den ABS-Sperrventilen 11,12 vorgesehenes Relaisventil der Einfachheit halber nicht dargestellt. Weiterhin sind nicht die verschiedenen Bremskreise und Ansteuerungen mehrerer Radbremsen eines Bremskreises dargestellt.

Das Zuschaltventil 10 leitet dann in seiner gezeigten Grundstellung den Fahrer- Bremsdruck p1 über das offene ABS-Einlassventil 11, bei geschlossenem ABS-Auslassventil 12, auf die Bremsleitung 16 zu der Radbremse 14 weiter.

In diesem analogen Fahrer-Bremsbetrieb dienen die ABS-Sperrventile 11 und 12 somit lediglich dem ABS-Regelfall in den bekannten Phasen Druck Erhöhen-Druck Halten-Druck Ablassen, wozu die ABS-Sperrventile 11 und 12 von der ABS-Steuereinrichtung 8 über ABS-Steuersignale S2 und S3 angesteuert werden. Hierzu nimmt die ABS-Steuereinrichtung 8 weiterhin Raddrehzahl-Signale n der Raddrehzahl-Sensoren (ABS-Sensoren) 17 auf. Somit wird im analogen Bremssteuer-Betrieb der vom Fahrer über das Bremspedal 2 und das Bremsventil 3 eingegebene analoge Fahrer- Bremsdruck p1 über die Bremsdruck-Steuerleitung 5 und die Bremsleitung 16 zu der Radbremse 14 geführt, im Allgemeinen mit zum Beispiel ergänzendem Relaisventil zur Mengenverstärkung.

Das Druckluft-Bremssystem 1 ermöglicht weiterhin Komfort-Bremsfunktionen beziehungsweise Fahrerassistenzfunktionen, die auch als ADAS (Additional Driver Assistant System) bezeichnet werden und nicht die Fahrstabilitätsregelung selbst betreffen, sondern ergänzend vorgesehen sein können. Beispiele eines ADAS sind insbesondere ACC (automotive cruise control, Abstandshaltesystem), AEBS (Notbremssystem) zur selbsttätigen Einleitung einer Notbremsung bei Erkennen einer Gefahrensituation zur Verhinderung eines Unfalls, und/oder bei Erkennen eines voraussichtlich erfolgenden Unfalls zur Verringerung der Unfallschwere (pre-crash-system). Ein weiteres ADAS ist EBA (elektronischer Bremsassistent), der noch vor einer Gefahrensituation durch selektive Bremsung eingreift und somit weitergehende Kriterien als ein Notbremssystem heranzieht; ein EBA kann insbesondere bei einer schwachen Bremsbetätigung des Fahrers die Bremskraft erhöhen.

Eine Fahrerassistenz-Steuereinrichtung 20 gibt hierzu ein externes Bremsanforderungs-Signal XBR an eine Schnittstelle 8a der ABS- Steuereinrichtung 8 aus. Die Datenkommunikation kann insbesondere über einen Fahrzeuginternen Daten, zum Beispiel CAN-Bus 21 erfolgen.

Die Umschaltung vom analogen Fahrer-Bremsbetrieb auf die Fahrerassistenz-Bremsbetrieb X-BB erfolgt über das Zuschaltventil 10, das von der ABS- Steuereinrichtung 8 über ein Zuschaltsignal S4 angesteuert wird.

Falls somit kein Bremswunsch des Fahrers vorliegt, d.h. die ABS- Steuereinrichtung 8 über das Bremsdruck-Messsignal S1 keine Betätigung des Bremspedals 2 misst, wird ein Fahrerassistenz-Bremsbetrieb X-BB ausgeregelt, bei dem die der ABS- Steuereinrichtung 8 über das Zuschaltsignal S4 das Zuschaltventil 10 umschaltet in dessen Funktionsstellung. In der Funktionsstellung wird ein Systemdruck (Vorratsdruck) p0 des zweiten Druckluft-Vorratsspeichers 18 über die Versorgungsleitung 19 und das Zuschaltventil 10 durchgeleitet zu den ABS-Sperrventilen 11, 12, und durch Taktung der ABS-Sperrventile 11, 12, das heißt des ABS-Einlassventils 11 und des ABS-Auslassventils 12, mittels der ABS-Steuersignale S2, S3 auf der Bremsleitung 16 ausgeregelt. Hierdurch kann der in dem externen Bremsanforderungs-Signal XBR angegebene externe Bremsdruckwert pxw als analoger Betriebsbremsdruckwert p16 in der Bremsleitung 16 ausgeregelt werden. Hierbei kann ergänzend an der Bremsleitung 16 ein weiterer Drucksensor vorgesehen sein; er ist aber nicht erforderlich.

Neben dem Fahrer-Bremsbetrieb und dem reinen Fahrerassistenz- Bremsbetrieb X-BB ist weiterhin ein kombinierter Bremsbetrieb K-BB vorgesehen, der von der ABS-Steuereinrichtung 8 eingeleitet wird, wenn sowohl ein - durch das Bremsdruck-Messsignal S1 ermittelter - Fahrer-Bremswunsch, als auch ein externes Bremsanforderungs-Signal XBR vorliegen. In dem kombinierten Bremsbetrieb K-BB wird die externe Bremsanforderung, d.h. der externe Bremsdruckwert pxw herangezogen und weiterhin aus dem Messsignal S1, d.h. dem sensierten Fahrer-Bremsdruck p1, ein Fahrer-Bremsdruckwert p1w ermittelt.

Falls der Fahrer das Bremspedal 2 teilweise betätigt, kann somit zum Beispiel durch das Bremsventil 3 ein Fahrer-Bremsdruck p1 mit einem Fahrer-Bremsdruckwert p1w von 3 bar ausgesteuert werden, der über das Bremsdruck-Messsignal S1 von der ABS-Steuereinrichtung 8 als 30-prozentige Betätigung ermittelt wird; entsprechend wird ein Fahrer-Bremsdruck p1 gleich 7 bar als 70-prozentige Betätigung ermittelt.

Nachfolgend wird ein kombinierter Bremsdruckwert pcw ermittelt, indem der externe Bremsdruckwert pxw und der Fahrer- Bremsdruckwert p1w zusammen berücksichtigt bzw. überlagert werden; dies kann durch additive Überlagerung, aber auch durch nicht-additive oder nicht-lineare Überlagerung erfolgen.

Hierbei können weitere Bedingungen heran gezogen werden. So kann eine Begrenzung des ermittelten kombinierten Bremsdruckwerts pcw auf einen Maximalwert pc_max erfolgen.

Alternativ oder weiterhin kann vorgesehen sein, dass
in dem Fall, dass der Fahrer-Bremsdruckwert p1w einen oberen Grenzwert p1-max von z. B. 7 bar oder 8 bar überschreitet, der Fahrer-Bremsdruck p1w als kombinierter Bremsdruckwert pcw ausgesteuert werden, und/oder in dem Fall, dass der externe Bremsdruckwert pxw einen oberen Grenzwert px_max von z. B. 7 bar oder 8 bar überschreitet, der externe Bremsdruckwert pxw als kombinierter Bremsdruckwert pcw ausgesteuert werden. Eine derartige Ermittlung kann somit eine Maximalwert-Bildung darstellen, bei der ein maximaler oder größerer der beiden Bremsdrücke p1 und px durchgesteuert wird, wenn er zusätzlich den oberen Grenzwert p1-max bzw. px_max überschreitet.

Eine weitere Modifikation des kombinierten Bremsbetriebes K-BB kann darin liegen, dass in dem Fall, dass der Fahrer-Bremsdruckwert p1w den externen Bremsdruckwert pxw übersteigt, von dem kombinierten Bremsbetrieb K-BB beziehungsweise Additions-Modus auf den Fahrer-Bremsbetrieb umgeschaltet wird und somit das Zuschalt-Signal S4 gestoppt wird. Hierdurch kann dem Fahrer direkt ein besseres Brems-Gefühl beziehungsweise eine direkte Zuordnung der ermittelten Bremsleistung zu seiner Bremspedal-Betätigung vermittelt werden, wobei das externe Bremsanforderungssignal XBR in diesem Fall auch über-erfüllt ist.

Die Ermittlung des kombinierten Bremsdrucks pc kann wie oben beschrieben in der ABS-Steuereinrichtung 8 erfolgen. Alternativ hierzu kann diese Ermittlung aber auch in der externen Fahrerassistenz-Steuereinrichtung 20 erfolgen. Hierzu übermittelt dann die ABS-Steuereinrichtung 8 den durch das Bremsdruck-Messsignal S1 ermittelten Fahrer-Bremsdruckwert p1w als Übermittlungssignal DBR, sodass die externe Fahrerassistenz- Steuereinrichtung 20 wiederum z. B. durch Addition, gegebenenfalls mit den oberen weiteren Bedingungen, das externe Bremsanforderungssignal XBR ermittelt und zurück an die ABS-Steuereinrichtung 8 ausgibt, sodass die ABS-Steuereinrichtung 8 auf Grundlage des externen Bremsanforderungs-Signals XBR jeweils in der Funktionsstellung des Zuschaltventils 10 das Zuschalt-Signal S4 ausgibt und die ABS-Sperrventile 11 und 12 über die ABS-Steuersignale S2 und S3 aussteuert.

Weiterhin können auch ein unterer Anteils-Schwellwert und ein oberer Anteils-Schwellwert vorgesehen sein, die einen Übergangsbereich definieren, in dem zum Beispiel eine Rampe eingesetzt wird, mit der der Anteil des Fahrer-Bremsdruckwertes p1w zum Beispiel erhöht wird, z. B. linear; bei Erreichen des oberen Anteils-Schwellwertes kann somit vollständig auf den Fahrer-Bremsbetrieb umgeschaltet werden, das heißt die Zuschalteinrichtungen in ihre (Grund-)Stellung umgeschaltet werden. Durch den Übergangsbereich mit den beiden Anteils-Schwellwerten kann insbesondere auch ein zu schnelles Hin-und Herschalten vermieden werden. Hierbei kann der Fahrerassistenz-Bremsdruck in dem Übergangsbereich noch in geringem Umfang berücksichtigt werden.

Alternativ zu dieser Modifikation, beziehungswiese ergänzend hierzu, kann auch ein Übergangsbereich eingesetzt werden, zum Beispiel als Rampe. Die Rampe kann durch den Anteil ap1 des Fahrer-Bremsdruckwerts p1w und den Anteil apx des externe Bremsdruckwert pxw am kombinierten Bremsdruckwert pcw definiert werden, mit ap1+apx=1. So kann bei in dem Fall, dass der Anteil ap1 des ermittelten Fahrer-Bremsdruckwertes p1w einen unteren Anteils-Schwellwerts Br_sw1, zum Beispiel 0,5 (50%), erreicht, nachfolgend der Anteil des externen Bremsdruckwertes pxw am kombinierten Bremsdruckwert pcw linear reduziert werden, bis der ermittelte Fahrer-Bremsdruckwert p1w einen oberen Anteils-Schwellwert Br_sw2 erreicht, bei dem der externe Bremsdruckwert pxw und somit auch das externe Bremsanforderungssignal XBR gar nicht mehr berücksichtigt werden. Bei Erreichen des oberen Anteils-Schwellwertes Br_sw2 kann somit das Zuschaltventil 10 wieder zurückgeschaltet werden, das heißt S4 = 0, zur Einleitung des normalen Fahrer-Bremsbetriebs.

Bei den oben beschriebenen Ausführungsformen kann ergänzend auch eine Gefälleinformation berücksichtigt werden, das heißt Informationen über die Steigung (positive Steigung bzw. negative Steigung (Gefälle)) der Fahrbahn. So können insbesondere der Anteils-Schwellwert Br_sw 1 und der der Anteils-Schwellwert Br-sw2 in Abhängigkeit der Gefälleinformation gebildet werden.

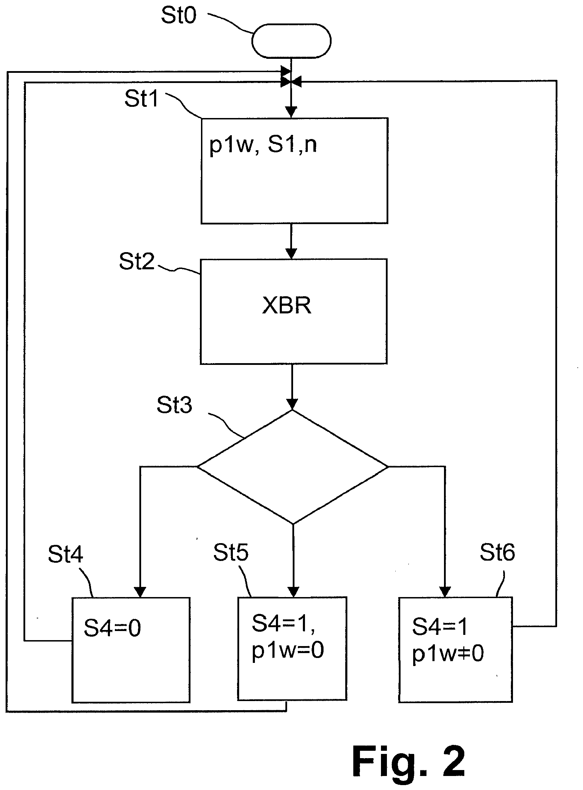

Das erfindungsgemäße Verfahren ist somit gemäß Figur 2 dahingehend ausgebildet, das nach einem Start im Schritt St0, insbesondere bei Fahrbetrieb und somit Einschalten der ABS-Steuereinrichtung 8 nachfolgend in Schritt St1 während des normalen Fahrbetriebes fortlaufend Fahrzustand-Signale und Fahrstabilitäts-Signale aufgenommen und verarbeitet werden.

Somit wird insbesondere der Fahr-Bremsdruckwert p1w durch Aufnahme des Bremsdruck-Messsignals S1 ermittelt, weiterhin werden gegebenenfalls Raddrehzahlen n des Fahrzeugrades 15 und entsprechend der weiteren Fahrzeugräder aufgenommen. Das Zuschaltventil 10 befindet sich in seiner Grundstellung, so dass bei Betätigung des Bremspedals 2 ein Fahrer-Bremsbetrieb erfolgt, ohne dass hierzu zunächst ein Eingreifen der ABS-Steuereinrichtung 8 erforderlich ist. Hierbei kann auch ein ABS-Regelfall auftreten, so dass dann die ABS-Steuereinrichtung 8 die ABS- Sperrventile 11, 12 über die ABS-Steuersignale S2, S3 ansteuert.

Im Schritt St2 wird abgerufen, ob ein externes Bremssignal XBR vorliegt.

In Schritt St3 wird entschieden, ob
- gemäß Schritt St4 ein Fahrer-Bremsbetrieb vorliegt, d.h. S4=0; dies kann insbesondere bei Fehlen eines externen Bremssignals XBR erfolgen, oder
- auch gemäß den obigen Ausführungsformen, wenn z. B. das externe Bremssignals XBR aufgrund eines zu geringen externen Bremsdruckwert pxw gar nicht berücksichtigt wird,
- gemäß Schritt St5 ein üblicher Fahrerassistenz-Bremsbetrieb X-BB vorliegt, d.h. bei Vorliegen eines externen Bremsanforderungs-Signals (XBR) und Messung, dass keine Fahrer-Bremsung (FB) vorliegt, d.h. p1w=0 bzw. (im Allgemeinen bei Atmosphärendruck), mit S4=1, d.h. Umschalten des Zuschaltventils 10 in die Funktionsstellung und Taktung der ABS-Sperrventile 11, 12,
- gemäß Schritt St6 ein kombinierter Bremsdruckwert pcw als Summe des Fahrer-Bremsdruckwertes p1w und des externen Bremsdruckwertes pxw ermittelt wird, das heißt pcw=p1w+pxw, der mit S4=1, d.h. Umschalten des Zuschaltventils 10 in die Funktionsstellung und Taktung der ABS- Sperrventile 11, 12.

Hierbei kann gegebenenfalls mit den oberen beschriebenen Ausführungen eine komplexere Ermittlung und Fall-Unterscheidung vorgenommen, um eine Begrenzung des kombinierten Bremsdruckwertes pcw auszubilden.

Das Verfahren wird dann jeweils vor den Schritt St1 zurückgesetzt und somit fortlaufend durchfahren.

### Bezugszeichenliste (Teil der Beschreibung)

- 1: Druckluft-Bremssystem
- 2: Bremspedal
- 3: Bremsventil
- 4: erster Druckluftvorratsspeicher
- 5: Bremsdruck-Steuerleitung
- 6: Drucksensor
- 7: Fahrzeug, insbesondere Nutzfahrzeug
- 8: ABS-Steuereinrichtung
- 8a: Schnittstelle der ABS-Steuereinrichtung 8
- 10: Zuschalteinrichtung, Zuschaltventil
- 11, 12: ABS-Sperrventile

- 11: ABS-Einlassventil
- 12: ABS-Auslassventil

- 14: Radbremse
- 15: Fahrzeugrad
- 16: Bremsleitung
- 17: Raddrehzahl-Sensor (ABS-Sensor)
- 18: zweiter Druckluft-Vorratsspeicher
- 19: Versorgungsleitung
- 20: externe Fahrerassistenz-Steuereinrichtung
- 21: CAN-Bus
- 22: Bremskreis
- 23: Fahrerassistenz-System

- n: Raddrehzahl

- S1: Bremsdruck-.Messsignal
- S2, S3: ABS-Steuersignale
- S4: Zuschalt-Signal
- XBR: externes Bremsanforderungs-Signal
- DBR: Übermittlungssignal von der ABS-Steuereinrichtung 8 zu der externen Fahrerassistenz-Steuereinrichtung 20

- p0: Systemdruck
- p1: Fahrer-Bremsdruck
- px: externer Bremsdruck
- pc: kombinierter Bremsdruck
- p16: analoger Betriebsbremsdruck in der Bremsleitung 16

- p1w: Fahrer-Bremsdruckwert
- pxw: externer Bremsdruckwert
- pcw: kombinierter Bremsdruckwert

- pc_max: Grenzwert des kombinierten Bremsdruckwertes

- Br_sw1: unterer Anteils-Schwellwert
- Br_sw2: oberer Anteils-Schwellwert
- St0-St4:: Schritte des Verfahrens

- FB: Fahrer-Bremsung
- FSt: Fahrstabilität
- HC: Auffahrunfall
- BAS: Bremsassistenzfunktion
- VoV: Volumenverstärkung
- VV: Mengenverstärkung
- Rp: Übergangsfunktion, Rampe
- X-BB: Fahrerassistenz-Bremsbetrieb
- K-BB: kombinierter Bremsbetrieb

## Patentansprüche

1. Verfahren zur Steuerung eines Druckluft-Bremssystems (1) eines Fahrzeugs, mit folgenden Schritten:
bei einer Fahrer-Bremsung (FB) durch Betätigen eines Bremspedals (2) Ausgabe eines analogen Fahrer-Bremsdrucks (p1) über eine Bremsdruck-Steuerleitung (5), eine in Fahrerbrems-Stellung (S4 = 0) eingestellte Zuschalteinrichtung (10) zu einem Bremskreis (22) mit mindestens einer ABS- Sperrventileinrichtung (11,12), einer Bremsleitung (16) und einer Radbremse (14) (St4),
bei Vorliegen eines externen Bremsanforderungs-Signals (XBR) eines Fahrerassistenz-Systems (23) ohne gleichzeitige Fahrer-Bremsung (FB) Umschalten der Zuschalteinrichtung (10) in eine Funktionsstellung (S4 = 1), Durchleiten eines Systemdrucks (p0) zu der ABS- Sperrventileinrichtung (11, 12) und Aussteuerung eines analogen Bremsdrucks (p16) auf der mindestens einen Bremsleitung (16) des Bremskreises (22) mit der mindestens einen Radbremse (14) durch Ansteuerung der ABS-Sperrventileinrichtung (11, 12) (St5),
**dadurch gekennzeichnet, dass**
bei Vorliegen sowohl einer Fahrer-Bremsung (FB) als auch eines externen Bremsanforderungs-Signals (XBR) der Fahrer-Bremsdruck (p1) gemessen und ein Fahrer-Bremsdruckwert (p1w) ermittelt wird,
der Fahrer-Bremsdruckwert (p1w) und ein im externen Bremsanforderungs-Signals (XBR) enthaltener externer Bremsdruckwert (pxw) addiert oder überlagert werden zu einem kombinierten Bremsdruckwert (pcw), und
die Zuschalteinrichtung (10) in die Funktionsstellung (S4 = 1) geschaltet wird und der kombinierte Bremsdruckwert (pcw) aus dem Systemdruck (p0) durch Ansteuerung der ABS-Sperrventileinrichtung (11, 12) ausgesteuert wird (St6).

2. Verfahren nach Anspruch 1, **dadurch gekennzeichnet, dass** das externe Bremsanforderungs-Signal (XBR) von einer externen Fahrerassistenzfunktions-Steuereinrichtung (20) ausgegeben wird, die nicht die Fahrstabilität (FSt) des Fahrzeugs (7) regelt oder steuert, wobei das Fahrerassistenz-System (23) insbesondere eines oder mehrere der Elemente aus der folgenden Gruppe aufweist:
ein Abstandshaltesystem (ACC), ein Notbremssystem zur Vermeidung eines Auffahrunfalles (HC) und/oder zur Verringerung der Schwere eines Auffahrunfalls (HC), eine Bremsassistenzfunktion (BAS) zur Verstärkung einer Fahrer-Bremsung (FB).

3. Verfahren nach Anspruch 1 oder 2, **dadurch gekennzeichnet, dass** in der Fahrerbrems-Stellung (S4 = 0) der analoge Fahrer-Bremsdruck (p1) zu der Bremsleitung (16) mit einer Volumenverstärkung (VoV) oder Mengenverstärkung (VV) durchgeleitet wird.

4. Verfahren nach einem der vorherigen Ansprüche, **dadurch gekennzeichnet, dass** die ABS-Sperrventileinrichtung (11, 12) zur Aussteuerung des externen Bremsdruckwertes (pxw) und/oder zur Aussteuerung des kombinierten Bremsdruckwertes (pcw) getaktet ausgesteuert wird, zum Beispiel durch Takten eines ABS-Einlass-Sperrventils (11) und Takten eines ABS-Auslassventils (12).

5. Verfahren nach einem der vorherigen Ansprüche, **dadurch gekennzeichnet, dass** bei der Ermittlung des kombinierten Bremsdruckwertes (pcw) der externe Bremsdruckwert (pxw) und der Fahrer-Bremsdruckwert (p1w) addiert werden.

6. Verfahren nach einem der vorherigen Ansprüche, **dadurch gekennzeichnet, dass** der ermittelte kombinierte Bremsdruckwertes (pcw) auf einen maximalen Grenzwert (pc_max) begrenzt wird.

7. Verfahren nach einem der vorherigen Ansprüche, **dadurch gekennzeichnet, dass** in dem Fall, dass der Fahrer-Bremsdruckwert (p1w) den externen Bremsdruckwert (pxw) übersteigt, die Zuschalteinrichtung (10) in die Fahrerbrems-Stellung (S4 = 0) umgeschaltet wird.

8. Verfahren nach Anspruch 7, **dadurch gekennzeichnet, dass** in dem Fall, dass ein relativer Anteil des Fahrer-Bremsdruckwertes (p1w) an dem ermittelten kombinierten Bremsdruckwert (pcw) einen unteren Anteils-Schwellwert (Br_sw1) überschreitet und einen oberen Anteils- Schwellwert (Br_sw2) unterschreitet, der Anteil des externen Bremsdruckwertes (pxw) mittels einer Übergangsfunktion (Rp), zum Beispiel einer Rampe (Rp), reduziert wird, und
oberhalb des oberen Anteils-Schwellwertes (Br_sw2) die Zuschalteinrichtung (10) in die Fahrerbrems-Stellung (S4 = 0) umgeschaltet wird.

9. Verfahren nach einem der vorherigen Ansprüche, **dadurch gekennzeichnet, dass** der kombinierten Bremsdruckwertes (pcw) in der ABS-Steuereinrichtung (8) des Druckluft-Bremssystems (1) ermittelt wird.

10. Verfahren nach einem der Ansprüche 1 bis 8, **dadurch gekennzeichnet, dass** zur Ermittlung des kombinierten Bremsdruckwertes (pcw)
die ABS-Steuereinrichtung (8) ein Fahrerbremsdruckwert-Signal (DBR) an die externe Fahrerassistenzfunktions-Steuereinrichtung (20) übermittelt,
die externe Fahrerassistenzfunktions-Steuereinrichtung (20) den kombinierten Bremsdruckwert (pcw) ermittelt und als neues externes Bremsanforderungssignal (XBR) an die ABS-Steuereinrichtung (8) zurück übermittelt, zur Aussteuerung des kombinierten Bremsdruckwertes (pcw) in der Funktionsstellung (S4 = 1) der Zuschalteinrichtung (10).

11. Druckluft-Bremssystem (1) für ein Fahrzeug (7), wobei das Druckluft-Bremssystem (1) aufweist:
ein Bremspedal (2) und ein durch das Bremspedal (2) ansteuerbares Bremsventil (3) zur Ausgabe eines analogen Fahrbetrieb-Bremsdrucks (p1),
eine Bremsdruck-Steuerleitung (5) zum Leiten oder Führen des analogen Fahrer-Bremsdrucks (p1),
mindestens einen Bremskreis (22) mit mindestens einer ABS- Sperrventileinrichtung (11, 12), einer Bremsleitung (16) und einer Radbremse (14),
eine Zuschalteinrichtung (10), die in eine Fahrerbrems-Stellung (S4 = 0) zum Zuschalten des Fahrer-Bremsdrucks (p1) und in eine Funktionsstellung (S4 = 1) zum Zuschalten eines Systemdrucks (p0) zu dem Bremskreis (22) einstellbar ist,
eine ABS-Steuereinrichtung (8) zur Ansteuerung der ABS- Sperrventileinrichtung (11, 12) mittels ABS-Steuersignalen (S2, S3) und der Zuschalteinrichtung (10) mittels eines Zuschalt-Signals (S4),
wobei die ABS-Steuereinrichtung (8) eine Schnittstelle (8a) zur Aufnahme eines externen Bremsanforderungssignals (XBR) einer externen Fahrerassistenz-Steuereinrichtung (20) aufweist und bei Vorliegen eines externen Bremsanforderungssignals (XBR) durch die ABS- Steuereinrichtung (8) ein Fahrerassistenz-Bremsbetrieb (X-BB) aussteuerbar ist,
wobei in der Fahrerbrems-Stellung (S4 = 0) der Zuschalteinrichtung (10) die Bremsdruck-Steuerleitung (5) an den Bremskreis (22) angeschlossen ist
zur Aussteuerung des analogen Fahrer-Bremsdrucks (p1) an die Radbremse (14) für einen Fahrer-Bremsbetrieb,
wobei in einer Funktionsstellung (S4 = 1) der Zuschalteinrichtung (10) ein Systemdruck (p0) an den Bremskreis (22) angeschlossen ist zur Einstellung eines externen Bremsdrucks (px) an die Radbremse (14) durch Aussteuerung der ABS- Sperrventileinrichtung (11, 12) durch die ABS-Steuereinrichtung (8) für den Fahrerassistenz-Bremsbetrieb (X-BB),
**dadurch gekennzeichnet, dass**
ein Drucksensor (6) zur Messung des Fahrer-Bremsdrucks (p1) und
Ausgabe eines Bremsdruck-Messsignals (S1) mit einem Fahrer-Bremsdruckwert (p1w) an die ABS-Steuereinrichtung (8) vorgesehen ist,
wobei die ABS-Steuereinrichtung (8) ausgebildet ist, bei Vorliegen sowohl eines externen Bremsanforderungssignals (XBR) als auch eines Fahrer-Bremsdruckwertes (p1w)
- einen kombinierten Bremsdruckwert (pcw) zu ermitteln aus dem Fahrer-Bremsdruckwert (p1w) und einem externen Bremsdruckwert (pxw) des externen Bremsanforderungssignals (XBR),
- einen kombinierten Bremsbetrieb (K-BB) einzuleiten durch Einstellen der Zuschalteinrichtung (10) in die Funktionsstellung (S4 = 1) und Aussteuerung der ABS-Sperrventileinrichtung (11, 12) zur Einstellung des kombinierten Bremsdruckwertes (pcw) an der mindestens einen Radbremse (14).

12. Druckluft-Bremssystem nach Anspruch 11, **dadurch gekennzeichnet, dass** die Zuschalteinrichtung (10) ein Solenoid-Ventil (10) mit zwei Stellungen (S4 = 1, S4 = 0), insbesondere ein 3/2-Wegeventil ist, dessen unbetätigte Grundstellung die Fahrerbrems-Stellung (St = 0) ist zum Anschließen des Fahrer-Bremsdrucks (p1) der Bremsdruck-Steuerleitung (5) an den Bremskreis (22).

13. Druckluft-Bremssystem nach Anspruch 11 oder 12, **dadurch gekennzeichnet, dass** die ABS-Sperrventileinrichtung (11, 12) ein ABS-Einlassventil (11) und ein ABS-Auslassventil (12) aufweist, die in dem Fahrerassistenz-Bremsbetrieb (X-BB) und dem kombinierten Bremsbetrieb (K-BB) durch die ABS-Steuereinrichtung (8) getaktet ansteuerbar sind.

14. Druckluft-Bremssystem nach einem der Ansprüche 10 bis 13, **dadurch gekennzeichnet, dass** die ABS-Steuereinrichtung (8) mit ihrer Schnittstelle (8a) an einen Fahrzeug-internen Datenbus (21), zum Beispiel CAN-Bus (21), angeschlossen ist zur Aufnahme des externen Bremsanforderungssignals (XBR) .

15. Druckluft-Bremssystem nach einem der Ansprüche 10 bis 14, **dadurch gekennzeichnet, dass** die ABS-Steuereinrichtung (8) eine Recheneinrichtung (8b) aufweist zur Ermittlung des kombinierten Bremsdruckwertes (pcw) als Summe oder Überlagerung des Fahrer-Bremsdruckwertes (p1w) und des externen Bremsdruckwertes (pxw).

## Claims

1. Method for controlling a compressed air brake system (1) of a vehicle, with the following steps:
outputting an analog driver brake pressure (p1) via a brake pressure control line (5) during driver braking (FB) by operating a brake pedal (2), a switching device (10) set in a driver braking position (S4 = 0) to a brake circuit (22) with at least one ABS stop valve device (11,12), a brake line (16) and a wheel brake (14) (St4),
if there is an external brake demand signal (XBR) of a driver assistance system (23) without simultaneous driver braking (FB), changing over the switching device (10) to a functional position (S4 = 1), passing a system pressure (p0) through to the ABS stop valve device (11, 12) and controlling an analog brake pressure (p16) on the at least one brake line (16) of the brake circuit (22) with the at least one wheel brake (14) by actuating (St5) the ABS stop valve device (11, 12),
**characterized in that**
in the presence of both driver braking (FB) and an external brake demand signal (XBR), the driver brake pressure (p1) is measured and a driver brake pressure value (p1w) is determined,
the driver brake pressure value (p1w) and an external brake pressure value (pxw) contained in the external brake demand signal (XBR) are added or superimposed to form a combined brake pressure value (pcw), and
the switching device (10) is switched into the functional position (S4 = 1) and the combined brake pressure value (pcw) is controlled (St6) from the system pressure (p0) by actuating the ABS stop valve device (11, 12).

2. Method according to Claim 1, **characterized in that** the external brake demand signal (XBR) is output by an external driver assistance function control device (20), which does not regulate or control the ride stability (FSt) of the vehicle (7), wherein the driver assistance system (23) comprises in particular one or more of the elements from the following group:
an adaptive cruise control system (ACC), an emergency brake system for avoiding a frontal collision (HC) and/or for reducing the severity of a frontal collision(HC), and a brake assistance function (BAS) for boosting driver-braking (FB).

3. Method according to Claim 1 or 2, **characterized in that** in the driver braking position (S4 = 0) the analog driver brake pressure (p1) is passed through the brake line (16) with a volume boost (VoV) or a quantity boost (VV).

4. Method according to any one of the preceding claims, **characterized in that** the ABS stop valve device (11, 12) is controlled by clocking for modulation of the external brake pressure value (pxw) and/or for modulation of the combined brake pressure value (pcw), for example by clocking an ABS inlet stop valve (11) and clocking an ABS outlet valve (12).

5. Method according to any one of the preceding claims, **characterized in that** when determining the combined brake pressure value (pcw), the external brake pressure value (pxw) and the driver brake pressure value (plw) are added.

6. Method according to any one of the preceding claims, **characterized in that** the determined combined brake pressure value (pcw) is limited to a maximum limit value (pc_max).

7. Method according to any one of the preceding claims, **characterized in that** in the case in which the driver brake pressure value (plw) exceeds the external brake pressure value (pxw), the switching device (10) is changed over to the driver braking position (S4 = 0).

8. Method according to Claim 7, **characterized in that** in the case in which a relative proportion of the driver brake pressure value (plw) of the determined combined brake pressure value (pcw) exceeds a lower proportion threshold value (Br_sw1) and an upper proportion threshold value (Br_sw2), the proportion of the external brake pressure value (pxw) is reduced by means of a transition function (Rp), for example a ramp (Rp), and
above the upper proportion threshold value (Br_sw2) the switching device (10) is changed over to the driver braking position (S4 = 0).

9. Method according to any one of the preceding claims, **characterized in that** the combined brake pressure value (pcw) is determined in the ABS control device (8) of the compressed air brake system (1).

10. Method according to any one of Claims 1 to 8, **characterized in that** for the determination of the combined brake pressure value (pcw), the ABS control device (8) transmits a driver brake pressure value signal (DBR) to the external driver assistance function control device (20), the external driver assistance function control device (20) determines the combined brake pressure value (pcw) and transmits it back to the ABS control device (8) as a new external braking demand signal (XBR) for modulation of the combined brake pressure value (pcw) with the switching device (10) in the functional position (S4 = 1).

11. Compressed air brake system (1) for a vehicle (7), wherein the compressed air brake system (1) comprises :
a brake pedal (2) and a brake valve (3) actuated by the brake pedal (2) to output an analog driving mode brake pressure (p1),
a brake pressure control line (5) for passing or guiding the analog driver brake pressure (p1),
at least one brake circuit (22) with at least one ABS stop valve device (11, 12), a brake line (16) and a wheel brake (14),
a switching device (10), which can be set to a driver braking position (S4 = 0) for connecting the driver brake pressure (p1) and to a functional position (S4 = 1) for connecting a system pressure (p0) to the brake circuit (22),
an ABS control device (8) for actuating the ABS stop valve device (11, 12) by means of ABS control signals (S2, S3) and the switching device (10) by means of a switching signal (S4),
wherein the ABS control device (8) comprises an interface (8a) for receiving an external braking demand signal (XBR) of an external driver assistance control device (20) and a driver assistance braking mode (X-BB) can be controlled by the ABS control device (8) in the presence of an external braking demand signal (XBR),
wherein in the driver braking position (S4 = 0) of the switching device (10) the brake pressure control line (5) is connected to the brake circuit (22) for modulation of the analog driver brake pressure (p1) at the wheel brake (14) for a driver braking mode,
wherein in a functional position (S4 = 1) of the switching device (10) a system pressure (p0) is connected to the brake circuit (22) for setting an external brake pressure (px) at the wheel brake (14) by modulation of the ABS stop valve device (11, 12) by the ABS control device (8) for the driver assistance braking mode (X-BB),
**characterized in that**
a pressure sensor (6) is provided for measuring the driver brake pressure (p1) and outputting a brake pressure measurement signal (S1) with a driver brake pressure value (plw) to the ABS control device (8),
wherein the ABS control device (8) is embodied, in the presence of both an external braking demand signal (XBR) and a driver brake pressure value (plw)
- to determine a combined brake pressure value (pcw) from the driver brake pressure value (plw) and an external brake pressure value (pxw) of the external braking demand signal (XBR),
- to initiate a combined braking mode (K-BB) by setting the switching device (10) to the functional position (S4 = 1) and modulating the ABS stop valve device (11, 12) to set the combined brake pressure value (pcw) at the at least one wheel brake (14).

12. Compressed air brake system according to Claim 11, **characterized in that** the switching device (10) is a solenoid valve (10) with two positions (S4 = 1, S4 = 0), in particular is a 3/2-way valve, the non-actuated base position of which is the driver braking position (St = 0) for connecting the driver brake pressure (p1) of the brake pressure control line (5) to the brake circuit (22).

13. Compressed air brake system according to Claim 11 or 12, **characterized in that** the ABS stop valve device (11, 12) comprises an ABS inlet valve (11) and an ABS outlet valve (12), which can be controlled by the ABS control device (8) in a clocked manner in the driver assistance braking mode (X-BB) and the combined braking mode (K-BB).

14. Compressed air brake system according to any one of Claims 10 to 13, **characterized in that** the ABS control device (8) with the interface (8a) thereof is connected to a vehicle-internal data bus (21), for example a CAN bus (21), for receiving the external braking demand signal (XBR).

15. Compressed air brake system according to any one of Claims 10 to 14, **characterized in that** the ABS control device (8) comprises a computing device (8b) for the determination of the combined brake pressure value (pcw) as the sum or the superimposition of the driver brake pressure value (p1w) and the external brake pressure value (pxw).

## Revendications

1. Procédé, destiné à commander un système de freinage à air comprimé (1) d'un véhicule, comportant les étapes suivantes, consistant à :
lors d'un freinage de la part du conducteur (FB) par actionnement d'une pédale de frein (2), exercer une pression de freinage analogique du conducteur (p1) par l'intermédiaire d'une conduite de commande de la pression de freinage (5), d'un système d'activation (10) réglé en position de freinage du conducteur (S4 = 0) vers un circuit de freinage (22), pourvu d'au moins un système de soupape d'arrêt de l'ABS (11,12), d'une conduite de frein (16) et d'un frein de roue (14) (St4),
en présence d'un signal de demande de freinage (XBR) externe d'un système d'assistance du conducteur (23) sans freinage simultané de la part du conducteur (FB), commuter le système d'activation (10) dans une position fonctionnelle (S4 = 1), acheminer une pression du système (p0) vers le système de soupape d'arrêt ABS (11, 12) et piloter une pression de freinage (p16) analogique sur l'au moins une conduite de frein (16) du circuit de freinage (22) à l'aide de l'au moins un frein de roue (14), par activation du système de soupape d'arrêt ABS (11, 12) (St5),
**caractérisé**
**en ce qu'**en présence, aussi bien d'un freinage de la part du conducteur (FB) qu'également d'un signal de demande de freinage (XBR) externe, la pression de freinage exercée par le conducteur (p1) est mesurée et une valeur de pression de freinage du conducteur (plw) est déterminée,
et **en ce qu'**une valeur de pression de freinage du conducteur (plw) et une valeur de pression de freinage (pxw) externe contenue dans le signal de demande de freinage (XBR) externe s'additionnent ou se superposent en une valeur de pression de freinage mixte (pcw), et
**en ce que** le système d'activation (10) est commuté dans la position fonctionnelle (S4 = 1) et la valeur de pression de freinage mixte (pcw) est pilotée hors de la pression du système (p0) par activation du système de soupape d'arrêt de l'ABS (11, 12) (St6).

2. Procédé selon la revendication 1, **caractérisé en ce que** le signal de demande de freinage (XBR) externe est délivré par un système de commande externe de la fonction d'assistance du conducteur (20), qui ne règle ni ne commande la stabilité dynamique (FSt) du véhicule (7), le système d'assistance du conducteur (23) comportant notamment un ou plusieurs éléments du groupe suivant :
un système de maintien de la distance (ACC), un système de freinage d'urgence, destiné à éviter une collision (HC) et/ou à réduire la sévérité d'une collision (HC), une fonction d'assistance au freinage (BAS), destinée à renforcer un freinage de la part du conducteur (FB).

3. Procédé selon la revendication 1 ou 2, **caractérisé en ce que** dans la position de freinage du conducteur (S4 = 0), la pression de freinage analogique du conducteur (p1) est acheminée vers la conduite de frein (16) avec une amplification de volume (VoV) ou un renforcement de quantité (VV) .

4. Procédé selon l'une quelconque des revendications précédentes, **caractérisé en ce que** pour piloter la valeur de pression de freinage externe (pxw) et/ou pour piloter la valeur de pression de freinage mixte (pcw), le système de soupape d'arrêt de l'ABS (11, 12) est piloté de manière cadencée, par exemple par cadencement d'une soupape d'arrêt d'entrée de l'ABS (11) et cadencement d'une soupape de sortie de l'ABS (12).

5. Procédé selon l'une quelconque des revendications précédentes, **caractérisé en ce que** lors de la détermination de la valeur de pression de freinage mixte (pcw), la valeur de pression de freinage (pxw) externe et la valeur de pression de freinage du conducteur (plw) sont additionnées.

6. Procédé selon l'une quelconque des revendications précédentes, **caractérisé en ce que** la valeur de pression de freinage mixte (pcw) déterminée est limitée à une valeur limite maximale (pc_max).

7. Procédé selon l'une quelconque des revendications précédentes, **caractérisé en ce que** dans le cas où la valeur de pression de freinage du conducteur (plw) dépasse la valeur de pression de freinage externe (pxw), le système d'activation (10) passe dans la position de freinage du conducteur (S4 = 0) .

8. Procédé selon la revendication 7, **caractérisé en ce que** dans le cas où une part relative de la valeur de pression de freinage du conducteur (plw) de la valeur de pression de freinage mixte (pcw) déterminée dépasse une valeur seuil partielle inférieure (Br_sw1) et n'atteint pas une valeur seuil partielle supérieure (Br_sw2), la part de la valeur de pression de freinage externe (pxw) est réduite par une fonction transitoire (Rp), par exemple une rampe (Rp), et
au-delà de la valeur seuil partielle supérieure (Br_sw2), le système de commutation (10) passe dans la position de freinage du conducteur (S4 = 0) .

9. Procédé selon l'une quelconque des revendications précédentes, **caractérisé en ce que** la valeur de pression de freinage mixte (pcw) est déterminée dans le système de commande de l'ABS (8) du système de freinage à air comprimé (1).

10. Procédé selon l'une quelconque des revendications 1 à 8, **caractérisé en ce que** pour déterminer la valeur de pression de freinage mixte (pcw), le système de commande de l'ABS (8) transmet un signal de valeur de la pression de freinage exercée par le conducteur (DBR) au système de commande externe de la fonction d'assistance du conducteur (20),
le système de commande externe de la fonction d'assistance du conducteur (20) détermine la valeur de pression de freinage mixte (pcw) et la retransmet en tant que nouveau signal de demande de freinage externe (XBR) au système de commande de l'ABS (8), pour piloter la valeur de pression de freinage mixte (pcw) dans la position fonctionnelle (S4 = 1) du système d'activation (10) .

11. Système de freinage à air comprimé (1) destiné à un véhicule (7), le système de freinage à air comprimé (1) comportant :
une pédale de frein (2) et une soupape de frein (3) susceptible d'être actionnée par la pédale de frein (2), destinées à exercer une pression de freinage analogique du mode de conduite (p1),
une conduite de commande de la pression de freinage (5), destinée à diriger ou à guider pression de freinage analogique du conducteur (p1),
au moins un circuit de freinage (22), pourvu d'au moins un système de soupape d'arrêt de l'ABS (11, 12), d'une conduite de frein (16) et d'un frein de roue (14),
un système d'activation (10), qui est réglable dans une position de freinage du conducteur (S4 = 0), destinée à commuter la pression de freinage du conducteur (p1) et dans une position fonctionnelle (S4 = 1), destinée à commuter une pression du système (p0) vers le circuit de freinage (22),
un système de commande de l'ABS (8), destiné à actionner le système de soupape d'arrêt de l'ABS (11, 12) à l'aide de signaux de commande de l'ABS (S2, S3) et du système d'activation (10), à l'aide d'un signal d'activation (S4),
le système de commande de l'ABS (8) comportant une interface (8a), destinée à recevoir un signal de demande de freinage externe (XBR) d'un système de commande externe de l'assistance du conducteur (20) et en présence d'un signal de demande de freinage externe (XBR) par le système de commande de l'ABS (8), un mode de freinage par l'assistance du conducteur (X-BB) étant susceptible d'être piloté, dans la position de freinage du conducteur (S4 = 0), du système d'activation (10), la conduite de commande de la pression de freinage (5) étant raccordée sur le circuit de freinage (22),
pour piloter la pression de freinage analogique du conducteur (p1) vers le frein de roue (14), pour un mode de freinage du conducteur
dans une position fonctionnelle (S4 = 1) du système d'activation (10), une pression du système (p0) étant raccordée sur le circuit de freinage (22) pour le réglage d'une pression de freinage externe (px) sur le frein de roue (14), par pilotage du système de soupape de blocage de l'ABS (11, 12) par le système de commande de l'ABS (8) pour le mode de freinage par l'assistance du conducteur (X-BB), **caractérisé en ce**
**qu'**il est prévu un capteur de pression (6), destiné à mesurer la pression de freinage du conducteur (p1) et à délivrer un signal de mesure de la pression de freinage (S1) avec une valeur de pression de freinage du conducteur (plw) au système de commande de l'ABS (8), en présence d'un signal externe de demande de freinage (XBR), aussi bien que d'une valeur de pression de freinage du conducteur (p1w), le système de commande de l'ABS (8) étant conçu
- pour déterminer une valeur de pression de freinage mixte (pcw) à partir de la valeur de pression de freinage du conducteur (plw) et d'une valeur de pression de freinage externe (pxw) du signal externe de demande de freinage (XBR),
- pour initier un mode de freinage mixte (K-BB), par réglage du système d'activation (10) dans la position fonctionnelle (S4 = 1) et pilotage du système de soupape d'arrêt ABS (11, 12), pour le réglage de la valeur de pression de freinage mixte (pcw) sur l'au moins un frein de roue (14).

12. Système de freinage à air comprimé selon la revendication 11, **caractérisé en ce que** le système d'activation (10) est une soupape solénoïdale (10) à deux positions (S4 = 1, S4 = 0), notamment une soupape à 3/2 voies, dont la position de base non activée est la position de freinage conducteur (St = 0), destinée à raccorder la pression de freinage du conducteur (p1) de la conduite de commande de la pression de freinage (5) sur le circuit de freinage (22).

13. Système de freinage à air comprimé selon la revendication 11 ou 12, **caractérisé en ce que** le système de soupape d'arrêt ABS (11, 12) comporte une soupape d'entrée de l'ABS (11) et une soupape de sortie de l'ABS (12), qui en mode de freinage par l'assistance du conducteur (X-BB) et en mode de freinage mixte (K-BB) sont susceptibles d'être actionnées de manière cadencée par le système de commande de l'ABS (8).

14. Système de freinage à air comprimé selon l'une quelconque des revendications 10 à 13, **caractérisé en ce que** le système de commande de l'ABS (8) est raccordé par son interface (8a) sur un bus de données interne au véhicule (21), par exemple un bus CAN (21), pour réceptionner le signal externe de demande de freinage (XBR).

15. Système de freinage à air comprimé selon l'une quelconque des revendications 10 à 14, **caractérisé en ce que** le système de commande de l'ABS (8) comporte un système de calcul (8b), destiné à déterminer la valeur de pression de freinage mixte (pcw) en tant que somme ou superposition de la valeur de pression de freinage du conducteur (p1w) et de la valeur de pression de freinage externe (pxw) .
